# FASCICULE DE BREVET EUROPEEN

(11) **EP 4 412 441 B1**
(45) Date de publication et mention de la délivrance du brevet: **03.12.2025**
(21) Numéro de dépôt: 22797754.3
(22) Date de dépôt: 04.10.2022
(51) Int. Cl.: A01B 79/00, A01B 69/04

(54) **ROBOT AGRICOLE AUTONOME COMPRENANT UN DISPOSITIF DE PROTECTION DE CULTURES**
AUTONOMER LANDWIRTSCHAFTLICHER ROBOTER MIT EINER PFLANZENSCHUTZVORRICHTUNG
AUTONOMOUS AGRICULTURAL ROBOT COMPRISING A CROP PROTECTION DEVICE

(30) Priorité: 05.10.2021 FR 2110534
(43) Date de publication de la demande: 14.08.2024
(73) Titulaire: NAÏO-Technologies, 31750 Escalquens (FR)
(72) Inventeur: ANDREU, Joan, 11320 AIROUX (FR); JUNG, Franck, 31450 MONTLAUR (FR); MOINDRAULT, Denis, 31290 MAUREMONT (FR); MATHIEU, Bruno, 31320 CASTANET (FR); SEGUINEAU, Cédric, 31190 AUTERIVE (FR); SÉVERAC, Gaëtan, 31200 TOULOUSE (FR)
(74) Mandataire: Santarelli
(86) Numéro de dépôt international: PCT/EP2022/077499
(87) Numéro de publication internationale: WO 2023/057408

(56) Documents cités:
- EP-A1- 2 936 957
- EP-A1- 3 871 481
- WO-A1-2020/132233
- US-A1- 2020 344 939

## Description

### Domaine technique

La présente invention s'inscrit dans le domaine de l'agriculture et notamment des robots agricoles.

Plus précisément, l'invention concerne un robot agricole comprenant un dispositif de protection d'une parcelle de cultures pour protéger les parcelles de cultures d'éventuels dommages causés par le robot agricole lui-même ou ses outils. L'invention trouve notamment des applications dans les robots agricoles disposant de fonctions automatisées ou autonomes, qui sont dédiés à la culture en rangées basses, moyennes ou hautes, telles que les salades, le blé ou encore les vignes.

### Etat de l'art

Il est connu de l'art antérieur des robots agricoles se déplaçant et traitant les cultures de manière autonome. Ces robots agricoles comprennent des outils de traitement. Un exemple est divulgué dans la demande de brevet WO 2020/132233.

Lesdits outils de traitement peuvent comprendre un système de positionnement autonome, leur permettant, dans une configuration de fonctionnement optimal, d'être bien positionnés par rapport aux cultures pour effectuer le traitement.

Les opérations de traitement peuvent nécessiter une précision de positionnement des outils de traitement de l'ordre du centimètre. Par exemple, des couteaux de désherbage peuvent être utilisés dans des parcelles de cultures, telles que des salades, et un mauvais positionnement desdits couteaux de désherbage, une mauvaise utilisation, l'intrusion d'un élément externe dans le système (cailloux, branche...) ou un déréglage intempestif des outils (due aux vibrations par exemple) peut abimer la culture traitée.

Un mauvais positionnement ou une mauvaise utilisation des outils de traitement peut être dû à un dysfonctionnement du système de positionnement autonome, ou encore un dysfonctionnement des outils de traitement, à l'intrusion d'un élément externe dans le système (cailloux, branche...) ou un déréglage intempestif des outils (dû aux vibrations par exemple). Aussi, un dysfonctionnement d'une unité de commande ou d'un système de localisation peut entrainer des imprécisions dans le traitement des cultures et les abimer.

Afin de vérifier que les outils de traitement n'abîment pas la parcelle de culture, une supervision humaine est, à l'heure actuelle, nécessaire. Cette solution n'est pas satisfaisante, dans la mesure où le robot agricole n'opère pas en totale autonomie dans les parcelles de culture.

Néanmoins, sans supervision humaine, à l'heure actuelle, l'ensemble de la culture peut être endommagée suite à un dysfonctionnement préalablement évoqué. Aucun des systèmes actuels ne permet de répondre simultanément à tous les besoins requis, à savoir de proposer une technique de protection autonome d'une parcelle de cultures en temps réel, fiable et simple à mettre en œuvre.

### Présentation de l'invention

La présente invention vise à remédier à tout ou partie des inconvénients de l'état de la technique cités ci-dessus.

À cet effet, l'invention concerne un robot agricole autonome comprenant :
- une unité de commande ;
- des outils de traitement permettant de traiter des cultures ;
- des moyens d'avancement permettant au robot agricole autonome d'avancer dans une direction dite d'avancement au sein d'une parcelle de cultures.

Ledit robot agricole autonome comprend un dispositif de protection de la parcelle de cultures, ce dispositif de protection étant configuré pour :
- mesurer des grandeurs caractéristiques des cultures dites amont, ces cultures étant situées en amont des outils de traitement avant le passage des outils de traitement sur les cultures par rapport à la direction d'avancement ;
- mesurer des grandeurs caractéristiques des cultures dites aval, ces cultures étant situées en aval des outils de traitement après le passage des outils de traitement sur les cultures par rapport à la direction d'avancement ;

L'unité de commande est configurée pour :
- recevoir les mesures des grandeurs caractéristiques des cultures amont et aval issues du dispositif de protection ;
- traiter les mesures des grandeurs caractéristiques des cultures relevées par le dispositif de protection et effectuer une comparaison des mesures des grandeurs caractéristiques d'une même culture amont et aval, correspondant à la comparaison des grandeurs caractéristiques de ladite culture avant et après le passage des outils de traitement ;
- transmettre un ordre de protection de la parcelle de cultures au robot agricole autonome lorsque la comparaison dépasse un seuil prédéfini.

L'invention permet avantageusement d'avoir une comparaison en temps réel d'une grandeur caractéristique d'une culture avant son traitement par les outils de traitement et après son traitement par les outils de traitement. Elle permet avantageusement de protéger les autres cultures de la parcelle lorsqu'une culture a été abimée, ou lorsque le dispositif de protection est défectueux.

Dans un mode particulier de réalisation, les grandeurs caractéristiques mesurées par le dispositif de protection sont une image de la culture et/ou la largeur de la culture et/ou la hauteur de la culture et/ou l'angle que forme la culture avec le sol et/ou la position de la culture et/ou un espacement entre la culture et une autre culture de la parcelle.

Ces grandeurs caractéristiques permettent avantageusement de caractériser une culture. Si la culture est abîmée (par exemple, coupée, déplacée ou tordue) par les outils de traitement, la grandeur caractéristique de ladite culture avant son passage par les outils de traitement est différente de la grandeur caractéristique de ladite culture après son traitement par les outils de traitement. Une comparaison entre les grandeurs caractéristiques d'une même culture en amont et en aval des outils de traitement à deux instants différents permet de s'assurer que la culture n'a pas été endommagée par les outils de traitement, ou que le dispositif de protection n'est pas défectueux.

Dans un mode particulier de réalisation, les outils de traitement sont mobiles entre deux positions, une position de travail et une position relevée. L'unité de commande est configurée pour transmettre l'ordre de protection de la parcelle de cultures aux outils de traitement qui se positionnent en position relevée.

Cela permet avantageusement de protéger les autres cultures de la parcelle lorsqu'une culture a été abimée, ou que le dispositif de protection est défectueux, et de guider le robot agricole autonome vers un emplacement où les opérations de maintenance peuvent être réalisées facilement.

Dans un mode particulier de réalisation, l'unité de commande est configurée pour transmettre l'ordre de protection de la parcelle de cultures aux moyens d'avancement pour provoquer l'arrêt du robot agricole autonome.

Ce mode permet avantageusement de protéger les autres cultures de la parcelle lorsqu'une culture a été abimée, ou que le dispositif de protection est défectueux. Dans un mode particulier de réalisation, le robot agricole autonome comprend un système de localisation, et l'unité de commande est configurée pour associer les mesures des grandeurs caractéristiques relevées par le dispositif de protection des cultures amont et aval à une position estimée par le système de localisation de la culture caractérisée.

Ce mode de réalisation présente l'avantage de fiabiliser l'association des mesures des grandeurs caractéristiques d'une même culture amont et avant, à deux instants donnés.

Dans un mode de réalisation avantageux, le dispositif de protection de la parcelle de culture comprend deux dispositifs de caractérisation, le premier dispositif de caractérisation étant configuré pour mesurer les grandeurs caractéristiques des cultures amont ; le deuxième dispositif de caractérisation étant configuré pour mesurer les grandeurs caractéristiques des cultures aval.

Dans un mode particulier de réalisation, les deux dispositifs de caractérisation des cultures sont composés de capteurs de même type.

Cela permet avantageusement de simplifier la comparaison entre les deux grandeurs caractéristiques et d'améliorer la fiabilité du dispositif de protection de la parcelle de cultures.

Dans un mode particulier de réalisation, un dispositif de caractérisation des cultures comprend des capteurs d'image.

Ce mode de réalisation offre l'avantage audit dispositif de caractérisation de limiter son encombrement et sa masse.

Dans un mode particulier de réalisation, le robot agricole autonome comprend un châssis enjambeur définissant un couloir de passage pour une rangée de culture. Le dispositif de caractérisation des cultures comprend des bras mobiles disposés respectivement de part et d'autre d'un plan longitudinal médian du couloir de passage, et un capteur par bras configuré pour mesurer un changement de position dudit bras.

Ce mode de réalisation permet avantageusement audit dispositif de caractérisation d'être fiable, robuste et simple d'utilisation.

Dans un mode particulier de réalisation, le premier dispositif de caractérisation des cultures est positionné en amont des outils de traitement et le deuxième dispositif de caractérisation des cultures est positionné en aval des outils de traitement.

Cela permet avantageusement de simplifier leurs intégrations sur le robot agricole autonome.

L'invention concerne également un procédé de protection d'une parcelle de cultures. Ledit procédé est mis en œuvre par un robot agricole autonome dans un mode de réalisation précédemment décrit, et il comporte les étapes de :
- mesure des grandeurs caractéristiques des cultures amont et aval par le dispositif de protection ;
- transmission desdites mesures à l'unité de commande ;
- association par l'unité de commande des mesures d'une même culture amont et aval issues du dispositif de protection ;
- comparaison par l'unité de commande des mesures associées ;
- transmission d'un ordre de protection de la parcelle de cultures par l'unité de commande au robot agricole autonome si la comparaison dépasse un seuil prédéfini.

Dans un mode particulier de mise en œuvre, le procédé de protection d'une parcelle de cultures est mis en œuvre par un robot agricole autonome comprenant un système de localisation. Ledit procédé comporte une étape supplémentaire préliminaire de relevé de la localisation des cultures.

L'étape d'association des mesures par l'unité de commande comprend une première association de chaque mesure de grandeurs caractéristiques d'une culture issues du dispositif de protection à un positionnement estimé par le système de localisation de la culture caractérisée et une deuxième association des mesures de grandeurs caractéristiques issues du dispositif de protection associées à un même positionnement, lesdites mesures correspondant aux mesures des grandeurs caractéristiques d'une même culture amont et aval.

Cela permet de fiabiliser l'association des mesures des grandeurs caractéristiques, issues du dispositif de protection, d'une même culture à deux instants donnés, avant et après le traitement par les outils de traitement.

Dans un mode particulier de mise en œuvre, l'étape de transmission d'un ordre de protection de la parcelle de cultures par l'unité de commande au robot agricole autonome si la comparaison dépasse un seuil prédéfini comprend un envoi d'un ordre d'arrêt par l'unité de commande aux moyens d'avancement du robot agricole autonome.

Ce mode de mise en œuvre permet avantageusement de provoquer l'arrêt du robot agricole autonome et de protéger le reste de la parcelle de culture lorsqu'une culture a été abimée par les moyens de traitement défectueux.

Dans un mode particulier de mise en œuvre, l'étape de transmission d'un ordre de protection de la parcelle de cultures par l'unité de commande au robot agricole autonome si la comparaison dépasse un seuil prédéfini comprend un envoi d'un ordre de protection de la parcelle de culture par l'unité de commande aux outils de traitement qui se mettent dans une position dite relevée, correspondant à une position dans laquelle lesdits outils de traitement n'ont pas de contact avec les cultures.

Cela permet avantageusement de protéger les autres cultures de la parcelle lorsqu'une culture a été abimée par les moyens de traitement, ou lorsque le dispositif de protection est défectueux, et de guider le robot agricole autonome vers un emplacement où les opérations de maintenance peuvent être réalisées facilement. Dans un mode particulier de mise en œuvre, l'étape de transmission d'un ordre de protection de la parcelle de cultures par l'unité de commande au robot agricole autonome si la comparaison dépasse un seuil prédéfini comprend une analyse de la comparaison et une transmission aux outils de traitement d'un ordre de positionnement des outils de traitement.

Cela permet avantageusement de corriger les dérèglements des outils de traitement et de continuer le traitement des cultures sans les abimer.

L'invention concerne également un procédé de cartographie d'une parcelle de cultures. Ledit procédé de cartographie est mis en œuvre par un robot agricole autonome dans un mode de réalisation précédemment décrit, comprenant un système de localisation. Ledit procédé de cartographie comprend les étapes de :
- mesure des grandeurs caractéristiques des cultures amont par le dispositif de protection, transmission à l'unité de commande et détection des cultures amont par l'unité de commande ;
- association par l'unité de commande à chacune des cultures amont détectées de leurs localisations relevées par le système de localisation ;
- intégration de la localisation de chacune des cultures amont à une première cartographie par l'unité de commande ;
   lesdites étapes sont mises en œuvre parallèlement aux étapes suivantes :
   - mesure des grandeurs caractéristiques des cultures aval par le dispositif de protection, transmission à l'unité de commande et détection des cultures aval par l'unité de commande ;
   - association par l'unité de commande à chacune des cultures aval détectées de leurs localisations relevées par le système de localisation ;
   - intégration de la localisation de chacune des cultures aval à une première cartographie par l'unité de commande ;

Pour chaque localisation de culture amont issue de la première cartographie, recherche de la localisation de la culture aval la plus proche issue de la deuxième cartographie et association des deux localisations par l'unité de commande ;

Pour chaque culture amont issue de la première cartographie, intégration de la moyenne des deux localisations issues de la première et de la deuxième cartographie dans une troisième cartographie par l'unité de commande.

Ce procédé permet avantageusement d'effectuer une cartographie très fiable et plus précise qu'un système conventionnel avec un seul passage du robot agricole autonome dans la parcelle de cultures.

### Présentation des dessins

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
[Fig. 1] : une vue schématique de côté d'un robot agricole autonome équipé d'un dispositif de protection à un instant t1 ;
[Fig. 2] : une vue schématique de côté d'un robot agricole autonome équipé d'un dispositif de protection dans le même mode de réalisation illustré en figure 1 à un instant t2 ;
[Fig. 3] : une vue schématique de côté d'un robot agricole autonome équipé d'un dispositif de protection dans un autre mode de réalisation ;
[Fig. 4] : une vue schématique de face d'un robot agricole dans un autre mode de réalisation ;
[Fig. 5] : un logigramme illustrant le procédé de protection d'une parcelle de culture ;
[Fig. 6] : un logigramme illustrant le procédé de cartographie d'une parcelle de culture.

### Description détaillée de modes de réalisation

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

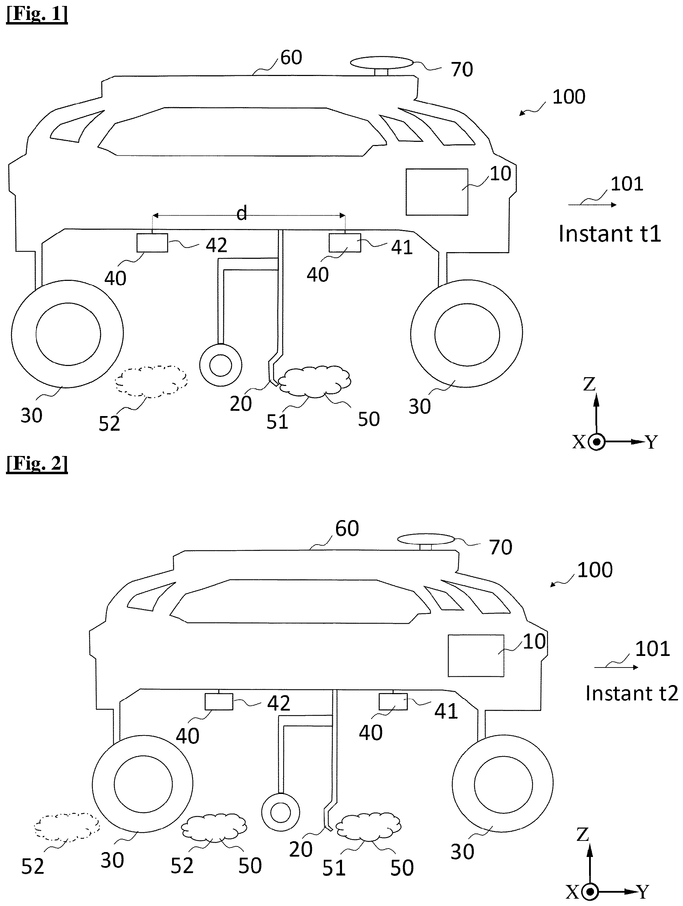

La figure 1, la figure 2 et la figure 3 illustrent une vue de côté d'un robot agricole autonome 100. Ledit robot agricole autonome comprend une unité de commande 10, des outils de traitement 20 permettant de traiter des cultures 50.

L'unité de commande 10 comprend, de manière classique, un calculateur.

Le robot agricole autonome 100 peut évoluer dans une parcelle de culture 50. Une parcelle de culture 50 peut comprendre plusieurs cultures du même type ou de types différents.

Les outils de traitement 20 peuvent comporter, de manière non limitative, des doigts kress, des disques émotteurs, des intercepts mécaniques, des disques crénelés, ou encore des couteaux.

Les outils de traitement 20 peuvent également être mobiles entre deux positions, une position dite de travail et une position relevée. Dans la position de travail, les outils de traitement 20 traitent les cultures 50. Dans la position relevée, les outils de traitement 20 n'ont pas de contact avec les cultures 50. Tout ou partie des outils de traitement 20, en position relevée, peut être inclinée sensiblement parallèlement au sol sur lequel évolue le robot agricole autonome 100. Tout ou partie desdits outils de traitement 20 peut également être décalée transversalement par rapport à la direction d'avancement 101.

Le robot agricole autonome 100 peut également comprendre un dispositif automatique de positionnement des outils de traitement 20. Ledit dispositif est de manière classique, relié à l'unité de commande 10. Ladite unité de commande est alors configurée pour lui transmettre des ordres de positionnement des outils de traitement 20, lesdits outils de traitement se positionnant alors dans la position transmise.

De manière non-limitative, les cultures 50 sont des cultures disposées en rangées dans le mode de réalisation décrit. Les cultures 50 peuvent être de grande taille, comme des ceps de vigne, de taille moyenne comme du blé, ou de petite taille comme des salades.

Le robot agricole autonome 100 comprend des moyens d'avancement 30. Lesdits moyens d'avancement permettent au robot agricole autonome 100 d'avancer dans une direction 101 dite d'avancement.

L'unité de commande 10 est classiquement reliée aux outils de traitement 20 et aux moyens d'avancement 30. Elle peut être configurée pour envoyer un ordre de mise en position relevée des outils de traitement 20. Dans ce cas, les outils de traitement 20 se positionnent en position relevée. De même, l'unité de commande 10 peut être configurée pour envoyer un ordre d'arrêt aux moyens d'avancement 30. Dans ce cas, les moyens d'avancement freinent jusqu'à provoquer l'arrêt du robot agricole autonome 100.

Le robot agricole autonome 100 peut avancer à une vitesse dite vitesse de traitement lors du traitement des parcelles de cultures.

Le robot agricole autonome 100 comprend également un dispositif de protection 40 de la parcelle de cultures. La protection de la parcelle de cultures signifie que si une culture 50 (ou un nombre limité de cultures 50) a été abimée par les outils de traitement 20, les autres cultures de la parcelle de cultures 50 sont protégées des outils de traitement 20.

Dès lors, une culture amont 51 à un instant t1 peut devenir une culture aval 52 à un instant t2, si t1 est inférieur à t2, et qu'entre t1 et t2, les outils de traitement 20 ont traité ladite culture.

Le dispositif de protection mesure des grandeurs caractéristiques des cultures 50 qui seront explicitées dans la suite de la description.

L'unité de commande 10 est configurée pour recevoir les mesures des grandeurs caractéristiques issues du dispositif de protection 40 des cultures 50. Elle est également configurée pour traiter les mesures des grandeurs caractéristiques relevées par le dispositif de protection 40 d'une même culture 50 avant et après le passage des outils de traitement 20.

L'unité de commande 10 est alors configurée pour associer les mesures des grandeurs caractéristiques d'une même culture 50 issues du dispositif de protection 40.

Le robot agricole peut également comprendre un système de localisation 70. Le système de localisation 70 comprend par exemple un système de positionnement par satellite, tel que le système GPS (de l'acronyme anglais *Global Position System*). L'unité de commande est alors configurée pour associer à chaque mesure d'une grandeur caractéristique d'une culture 50, un positionnement de ladite culture déterminé par le système de localisation 70. Des grandeurs caractéristiques associées à un même positionnement sont considérées comme étant associées à une même culture 50.

L'unité de commande 10 est configurée pour effectuer une comparaison des mesures des grandeurs caractéristiques relevées par le dispositif de protection 40 d'une même culture 50 avant et après le passage des outils de traitement 20.

Lorsque la comparaison dépasse un seuil prédéfini, l'unité de commande 10 peut être configurée pour envoyer un ordre d'arrêt au robot agricole autonome 100.

Cet ordre d'arrêt peut prendre plusieurs formes. L'unité de commande 10 peut être configurée pour envoyer un ordre d'arrêt aux moyens d'avancement 30.

L'unité de commande 10 peut être configurée pour transmettre un ordre de mise en position relevée des outils de traitement 20.

L'unité de commande 10 peut également être configurée pour envoyer un message d'erreur à un support externe à destination d'un opérateur.

Ces ordres d'arrêt peuvent être cumulés.

Les grandeurs caractéristiques mesurées ont pour objectif d'être représentatives de l'état des cultures 50. Par exemple, une culture 50 en bon état qui a ensuite été dégradée par les outils de traitement 20 présente une différence entre la mesure de sa grandeur caractéristique mesurée à t1 par le premier dispositif de protection 40 sur la culture amont 51 et la mesure de sa grandeur caractéristique mesurée à t2 par le dispositif de protection 40 sur la même culture aval 52.

Le dispositif de protection 40 de la parcelle de cultures 50 peut comprendre un premier dispositif de caractérisation 41 des cultures dites amont 51. Les cultures amont 51 sont situées en amont des outils de traitement 20, avant le passage des outils de traitement 20 sur les cultures amont 51 par rapport à la direction d'avancement 101. Autrement dit, ces cultures amont 51 n'ont pas été traitées par les outils de traitement 20 à un instant t1, comme représenté figure 1.

Le dispositif de protection 40 de la parcelle de cultures 50 peut également comprendre un deuxième dispositif de caractérisation 42 des cultures dites aval 52. Les cultures aval 52 sont situées en aval des outils de traitement 20, après le passage des outils de traitement 20 sur les cultures aval 52 par rapport à la direction d'avancement 101. Autrement dit, ces cultures aval 52 ont été traitées par les outils de traitement 20 à un instant t2, comme représenté figure 2.

Dans un premier mode de réalisation représenté en figure 1 et figure 2, les deux dispositifs de caractérisation 41, 42 peuvent comprendre des capteurs d'image. Ces capteurs d'image peuvent être des capteurs CMOS. Ces capteurs peuvent être orientés vers le sol. Ils peuvent également être orientés dans un plan normal à la direction d'avancement 101.

Les grandeurs caractéristiques mesurées peuvent être une image de la culture. Ainsi, si une différence de pixels est observée entre les deux images d'une même culture 50 avant et après le traitement par les outils de traitement 20, cela peut signifier que la culture 50 a été dégradée.

Les grandeurs caractéristiques peuvent également être la largeur de la culture 50, la largeur étant définie comme une dimension de la culture dans un plan parallèle au sol sur lequel évolue le robot agricole autonome 100 et perpendiculaire à sa direction d'avancement 101. Cette grandeur caractéristique peut notamment mettre en évidence une coupe ou un arrachement de la culture 50.

L'unité de commande 10 peut être configurée pour extraire la largeur d'une culture à partir d'une image extraire d'un capteur CMOS suite à un traitement d'images.

Les grandeurs caractéristiques peuvent également être la hauteur de la culture 50. La hauteur est définie comme la dimension de la culture 50 selon un axe sensiblement perpendiculaire au sol sur lequel évolue le robot agricole autonome 100. Cette grandeur caractéristique peut notamment mettre en évidence une coupe ou un arrachement de la culture 50.

L'unité de commande 10 peut être configurée pour extraire la hauteur d'une culture 50 à partir d'une image extraire d'un capteur CMOS suite à un traitement d'images. Les grandeurs caractéristiques peuvent également être l'angle que forme la culture 50 par rapport au sol sur lequel évolue le robot agricole autonome 100. Cette grandeur caractéristique peut notamment mettre en évidence un écrasement de la culture 50, particulièrement si celle-ci est une culture haute.

Les grandeurs caractéristiques peuvent également être la position de la culture 50. Ainsi, cette grandeur caractéristique peut notamment mettre en évidence un arrachement et déplacement de la culture 50.

De même, les grandeurs caractéristiques peuvent également être un espacement entre la culture 50 et une autre culture de la parcelle. De même, cette grandeur caractéristique peut notamment mettre en évidence un arrachement et déplacement de la culture 50.

De préférence, l'espacement est mesuré entre deux cultures 50 voisines, c'est-à-dire que l'une est traitée l'une juste après l'autre par les outils de traitement 20.

L'unité de commande 10 peut être configurée pour extraire l'angle que forme une culture 50 avec le sol sur lequel évolue le robot agricole autonome 100 à partir d'une image extraire d'un capteur CMOS suite à un traitement d'images.

Les deux dispositifs de caractérisation 41, 42 mesurent, préférentiellement, la même grandeur caractéristique.

Les deux dispositifs de caractérisation 41, 42 peuvent comprendre les mêmes capteurs. Les capteurs peuvent être reliés à l'unité de commande 10.

Les deux dispositifs de caractérisation 41, 42 peuvent être positionnés sur le robot agricole autonome 100 respectivement en amont et en aval des outils de traitement 20 selon la direction d'avancement 101. De préférence, ils sont fixés sur le robot agricole autonome 100.

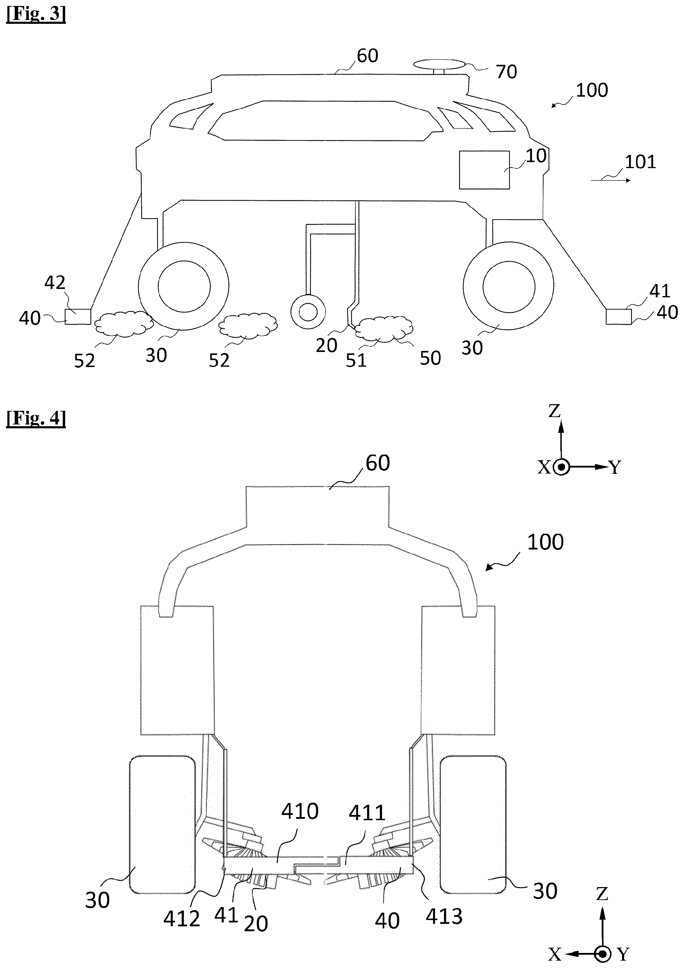

La figure 3 représente un deuxième mode de réalisation du robot agricole autonome 100. Le robot agricole autonome 100 comprenant un châssis enjambeur 60, définissant un couloir de passage pour une rangée de culture. Cette figure représente les deux dispositifs de caractérisation 41, 42, qui peuvent comprendre des bras mobiles. Les bras mobiles sont disposés respectivement de part et d'autre d'un plan longitudinal médian du couloir de passage. Les deux dispositifs de caractérisation 41, 42 comprennent également un capteur par bras configuré pour mesurer un changement de position dudit bras.

La figure 4 représente un autre mode de réalisation du robot agricole 100, comprenant les mêmes dispositifs de caractérisation 41,42. Les bras 410,411, du dispositif de caractérisation 41, dans ce mode de réalisation, mais de manière non limitative, sont mobiles en rotation et leurs capteurs 412,413 sont des capteurs angulaires.

Ces dispositifs de caractérisation 41,42 peuvent être configurés pour mesurer, comme grandeur caractéristique, la largeur de la culture 50. Cette largeur est liée géométriquement aux angles mesurés par les capteurs angulaires 412,413. Ainsi, les mesures d'angles issues des capteurs angulaires 412,413 caractérisent la largeur de la culture 50.

Les bras mobiles peuvent être mobiles en translation dans un plan perpendiculaire au plan longitudinal médian du couloir de passage. Ils peuvent alors être alors associés à des capteurs de déplacement linéaire.

De même, ces dispositifs de caractérisation peuvent être configurés pour mesurer, comme grandeur caractéristique, la largeur de la culture 50. Cette largeur est liée géométriquement aux déplacements mesurés par les capteurs de déplacement linéaire. Ainsi, les mesures d'angles issues des capteurs angulaires 412,413 caractérisent la largeur de la culture 50.

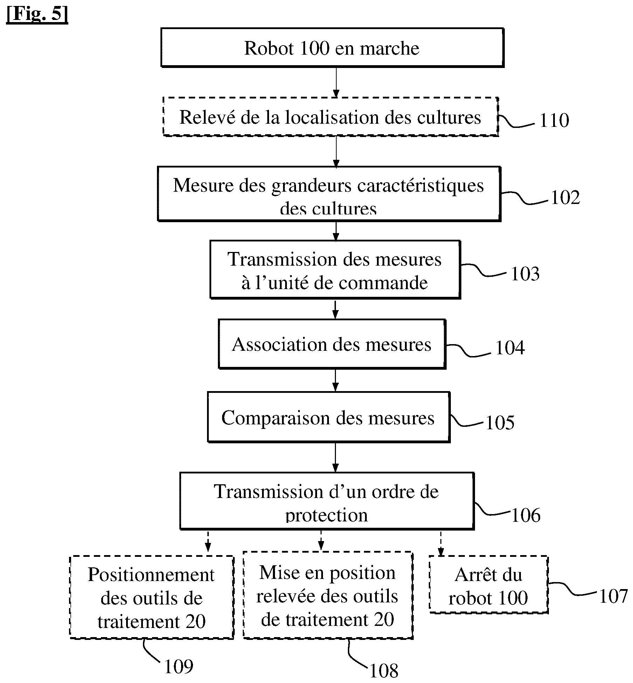

L'invention concerne également un procédé de protection d'une parcelle de cultures 50, illustré figure 5. Ce procédé peut être mis en œuvre par un robot agricole autonome 100 précédemment décrit, dans l'un quelconque de ses modes de réalisation, lorsque le robot agricole autonome 100 est en marche. Ce procédé comprend une première étape 102 de mesure des grandeurs caractéristiques des cultures amont 51 et aval 52 par le dispositif de protection. Ces grandeurs caractéristiques peuvent être représentatives de l'état des cultures amont et aval 51,52.

Le dispositif de protection transmet ensuite les mesures à l'unité de commande 10 lors de l'étape 103. La transmission des mesures est préférentiellement réalisée de manière filaire. Elle peut également être réalisée par d'autre moyens de transmission. Une prochaine étape 104 consiste à associer les mesures des grandeurs caractéristiques d'une même culture issues du dispositif de protection 40 avant le passage des outils (culture amont 51) et après le passage des outils (culture aval 52). Lorsque le robot agricole autonome 100 avance, une culture à un instant t1 située devant les outils selon la direction d'avancement 101 est une culture amont 51. La culture 50 se fait ensuite traiter par les outils de traitement 20, avant d'être, à un instant t2, une culture aval 52.

Les grandeurs caractéristiques peuvent être associées à une mesure temporelle chacune lors de l'étape 104. Cette mesure temporelle peut par exemple correspondre à l'heure, la minutes et la seconde de la prise de la mesure. La différence entre les deux mesures temporelles issues de dispositifs de caractérisation différents peut être associée à une distance en la multipliant par la vitesse du robot agricole autonome 100.

L'association des mesures 104 des grandeurs caractéristiques d'une même culture amont 51 et aval 52 peut comprendre une première association. Celle-ci associe, tout d'abord, lesdites mesures à une mesure temporelle chacune.

Pour une même culture 50, la différence entre les deux mesures temporelles multipliée par la vitesse du robot agricole autonome 100 peut être associée à la distance d séparant les emplacements où sont réalisées les mesures les grandeurs caractéristiques des cultures amont 51 et aval 52.

Les mesures des grandeurs caractéristiques des cultures amont 51 et aval 52 issues du dispositif de protection 40 dont la différence des mesures temporelles correspondent à la distance d divisée par la vitesse du robot agricole autonome 100 sont ensuite associées lors d'une deuxième association, dans l'étape d'association des mesures 104.

Lorsque le procédé est mis en œuvre par un robot agricole autonome 100 comprenant le système de positionnement par satellite 70, tel que le système GPS (de l'acronyme anglais *Global Position System*), le procédé peut comprendre une étape préliminaire complémentaire. L'étape 110 comprend un relevé de la localisation des cultures 50 à l'aide du système de positionnement par satellite.

L'étape 104 peut alors comprendre une première association de chaque mesure de grandeurs caractéristiques d'une culture 50 par le dispositif de protection 40 à un positionnement estimé par le système de localisation de la culture caractérisée 50. L'étape 104 peut également comprendre une deuxième association d'une mesure de grandeurs caractéristiques d'une culture amont 51 issue du dispositif de protection 40 et d'une mesure de grandeurs caractéristiques d'une culture aval 52 issue du dispositif de protection 40, les deux mesures étant associées à un même positionnement de la culture caractérisée. Un seuil de tolérance peut être appliqué sur la mesure du positionnement.

Le procédé comprend une étape 105. L'étape 105 comprend une comparaison entre deux mesures de grandeurs caractéristiques d'une même culture amont 51 et aval 52 issues du dispositif de protection 40.

Si la comparaison est inférieure à un seuil prédéterminé, c'est-à-dire que les grandeurs caractéristiques de la culture 51 amont à l'instant t1 et de la culture 52 aval à l'instant t2 sont identiques à une tolérance près, cela signifie que la culture a la même grandeur caractéristique avant et après le passage des outils de traitement 20. Autrement dit, les outils de traitement 20 n'ont pas abimé la culture 50 et le dispositif de protection 40 n'est pas défaillant.

Si la comparaison est supérieure au seuil prédéterminé, c'est-à-dire que les grandeurs caractéristiques de la culture 51 amont à l'instant t1 et de la culture 52 aval à l'instant t2 sont différentes, cela signifie que la culture n'a pas la même grandeur caractéristique avant et après le passage des outils de traitement 20.

Autrement dit, les outils de traitement 20 ont abimé la culture 50 ou le dispositif de protection 40 est défaillant.

Le seuil prédéfini peut être fixé par un opérateur, via un support externe (non représenté) connecté à l'unité de commande 10 par exemple. Ledit seuil peut dépendre de la tolérance de la comparaison des grandeurs caractéristiques comparées acceptée par l'opérateur et de la précision du dispositif de protection 40.

Le procédé comprend une étape 106. L'étape 106 comprend une transmission d'un ordre de protection de la parcelle de cultures par l'unité de commande 10 au robot agricole autonome 100 si la comparaison dépasse le seuil prédéfini.

L'ordre de protection peut être transmis par l'unité de commande 10 aux moyens d'avancement 30 lors d'une étape 107. Les moyens d'avancement 30 provoquent alors l'arrêt du robot agricole autonome 100. La parcelle de cultures 50 est ainsi protégée.

L'ordre de protection peut être transmis par l'unité de commande 10 aux outils de traitement 20 lors d'une étape 108. Il peut s'agir d'un ordre de mise en position relevée. Les outils de traitement 20 n'ont plus de contact avec le reste de la parcelle de cultures 50. La parcelle de cultures 50 est ainsi protégée.

L'ordre de protection peut être transmis par l'unité de commande 10 à un opérateur externe via le support externe (non représenté). L'opérateur peut ensuite piloter le robot agricole autonome pour mettre en sécurité la parcelle de cultures 50.

L'ordre de protection peut comprendre, pour un robot agricole autonome 100 comprenant un dispositif automatique de positionnement des outils de traitement 20 lors d'une étape 109, une analyse de la comparaison et une transmission aux outils de traitement 20 d'un ordre de positionnement des outils de traitement. Ainsi, si la grandeur caractéristique, par exemple, de manière non limitative, est une image, une analyse peut être réalisée sur la répartition des pixels entre l'image de la culture amont 51 et l'image de la culture aval 52. Par exemple, cette comparaison peut mettre en évidence que la culture aval 52 a été abimée (coupée par exemple) au niveau de l'une de ses extrémités. Cela peut signifier que les outils de traitement 20 se sont déréglés et donc mal positionnés.

L'analyse de la comparaison peut permettre de déterminer la distance de laquelle il faut repositionner les outils de traitement 20 pour ne pas que lesdits outils abiment la parcelle de cultures 50. L'unité de commande extrait ladite distance et la transmet au dispositif automatique de positionnement des outils de traitement 20.

Lorsque la comparaison est supérieure au seuil prédéfini, l'unité de commande 10 peut également générer un ordre de ralentissement aux moyens d'avancement 30.

Si après l'étape 109, la comparaison repasse en deçà du seuil prédéfini pendant une durée prédéfinie, l'unité de commande 10 peut générer un ordre de retour à la vitesse de traitement aux moyens d'avancement 30. Cela signifie que les outils de traitement 20 ont été réglé et ne présentent plus de danger pour la parcelle de cultures 50. La durée prédéfinie peut être intégrée dans l'unité de commande 10 par l'opérateur.

Si après l'étape 109, la comparaison ne repasse pas en deçà du seuil prédéfini pendant une durée prédéfinie, l'unité de commande 10 peut générer un ordre d'arrêt du robot agricole autonome 100. Cela signifie que les outils de traitement 20 n'ont pas été réglés de manière convenable et que la parcelle de culture 50 n'est pas en sécurité. La durée prédéfinie peut être intégrée dans l'unité de commande par l'opérateur.

De même, Si après l'étape 109, la comparaison ne repasse pas en deçà du seuil prédéfini pendant une durée prédéfinie, l'unité de commande 10 peut générer un ordre de mise en position relevée des outils de traitement 20. Cela signifie que les outils de traitement 20 n'ont pas été réglés automatiquement de manière convenable et que la parcelle de culture n'est pas en sécurité. La durée prédéfinie peut être intégrée dans l'unité de commande par l'opérateur.

Le procédé peut comprendre une étape supplémentaire de maintenance 109 des outils de traitement 20. Les outils de traitement 20 peuvent être réglés par un opérateur.

Le procédé peut également comprendre une étape supplémentaire de maintenance du dispositif de protection 40 d'une parcelle de culture 50.

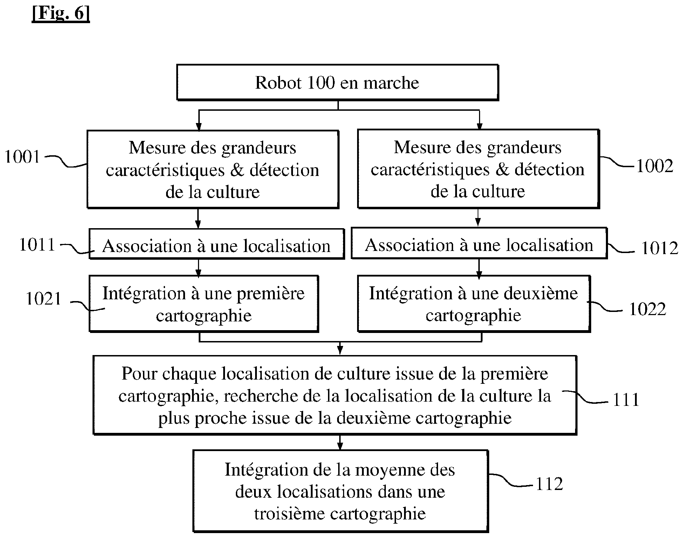

L'invention concerne également un procédé de cartographie d'une parcelle de cultures 50 mis en œuvre par un robot agricole autonome précédemment décrit, comprenant un système de localisation, illustré en figure 6. Ledit procédé comprend une première étape 1001 de mesure des grandeurs caractéristiques des cultures 50 par le premier dispositif de caractérisation 41 des cultures 50. Ces mesures sont transmises à l'unité de commande 10, qui détecte les cultures 50. Par exemple, lorsque la grandeur caractéristique mesurée est la largeur de la culture, la détection de la culture 10 est réalisée à l'endroit où la largeur mesurée est la plus élevée.

Le procédé comprend une deuxième étape 1011 d'association par l'unité de commande 10 à chacune des cultures 50 détectées de leurs localisations relevées par le système de localisation 70.

Le procédé comprend une troisième étape 1021 d'intégration de la localisation de chacune des cultures 50 à une première cartographie. La cartographie peut regrouper les informations de positionnement des cultures, un indexage des cultures, ainsi que les mesures des grandeurs caractéristiques associées.

Parallèlement de ces trois précédentes étapes, les trois étapes suivantes sont réalisées :
- une étape 1002 de mesure des grandeurs caractéristiques des cultures 50 par le deuxième dispositif de caractérisation 42 des cultures 50 et détection des cultures 50 ;
- une étape 1012 d'association par l'unité de commande 10 à chacune des cultures 50 détectées de leurs localisations relevées par le système de localisation 70 ;
- une étape 1022 d'intégration de la localisation de chacune des cultures 50 à une deuxième cartographie.

Dans une étape 111, pour chaque localisation de culture issue de la première cartographie, l'unité de traitement 10 recherche de la localisation de la culture 50 la plus proche issue de la deuxième cartographie et associe les deux localisations ensemble.

Dans une étape 112, pour chaque culture issue de la première cartographie, l'unité de commande 10 calcule la moyenne des deux localisations issues de la première et de la deuxième cartographie et l'intègre dans une troisième cartographie. La troisième cartographie peut ensuite être utilisée comme informations d'entrée pour l'élaboration d'un circuit de traitement d'un robot agricole autonome 100.

## Revendications

1. Robot agricole autonome (100) comprenant : une unité de commande (10) ; des outils de traitement (20) permettant de traiter des cultures (50) ; des moyens d'avancement (30) permettant au robot agricole autonome (100) d'avancer dans une direction dite d'avancement (101) au sein d'une parcelle de cultures (50) ; ledit robot agricole autonome étant **caractérisé en ce qu'**il comprend un dispositif de protection (40) de la parcelle de cultures (50), ce dispositif de protection étant configuré pour : mesurer des grandeurs caractéristiques des cultures dites amont (51), ces cultures étant situées en amont des outils de traitement (20) avant le passage des outils de traitement (20) sur les cultures (50) par rapport à la direction d'avancement (101) ; mesurer des grandeurs caractéristiques des cultures dites aval, ces cultures étant situées en aval des outils de traitement (20) après le passage des outils de traitement (20) sur les cultures (50) par rapport à la direction d'avancement (101) ; l'unité de commande (10) étant configurée pour : recevoir les mesures des grandeurs caractéristiques des cultures amont (51) et aval (52) issues du dispositif de protection (40) ; traiter les mesures des grandeurs caractéristiques des cultures relevées par le dispositif de protection (40) et effectuer une comparaison des mesures des grandeurs caractéristiques d'une même culture (50) amont (51) et aval (52), correspondant à la comparaison des grandeurs caractéristiques de ladite culture avant et après le passage des outils de traitement (20) ; transmettre un ordre de protection de la parcelle de cultures (50) au robot agricole autonome (100) lorsque la comparaison dépasse un seuil prédéfini.

2. Robot agricole autonome (100) selon l'une quelconque des revendications précédentes dans lequel les grandeurs caractéristiques mesurées par le dispositif de protection (40) des cultures (50) sont une image de la culture (50) et/ou la largeur de la culture (50) et/ou la hauteur de la culture (50) et/ou l'angle que forme la culture (50) avec le sol et/ou la position de la culture (50), et/ou un espacement entre la culture (50) et une autre culture de la parcelle.

3. Robot agricole autonome (100) selon l'une quelconque des revendications précédentes, dans lequel les outils de traitement (20) sont mobiles entre deux positions, une position de travail et une position relevée, l'unité de commande (10) étant configurée pour transmettre l'ordre de protection de la parcelle de cultures aux outils de traitement (20) qui se positionnent en position relevée.

4. Robot agricole autonome (100) selon l'une quelconque des revendications selon l'une quelconque des revendications précédentes, dans lequel l'unité de commande (10) est configurée pour transmettre l'ordre de protection de la parcelle de cultures aux moyens d'avancement (30) pour provoquer l'arrêt du robot agricole autonome (100).

5. Robot agricole autonome (100) selon l'une quelconque des revendications précédentes dans lequel le dispositif de protection (40) comprend un capteur d'images.

6. Robot agricole autonome (100) selon l'une quelconque des revendications précédentes, comprenant un châssis enjambeur (60) définissant un couloir de passage pour une rangée de culture (50), dans lequel le dispositif de protection (40) comprend des bras mobiles disposés respectivement de part et d'autre d'un plan longitudinal médian du couloir de passage, et un capteur par bras configuré pour mesurer un changement de position dudit bras.

7. Robot agricole autonome (100) selon l'une quelconque des revendications précédentes, comprenant un système de localisation (70), dans lequel l'unité de commande (10) est configurée pour associer les mesures des grandeurs caractéristiques relevées par le dispositif de protection (40) des cultures amont (51) et aval (52) à une position estimée par le système de localisation (70) de la culture caractérisée (50).

8. Robot agricole autonome (100) selon l'une quelconque des revendications précédentes dans lequel le dispositif de protection (40) de la parcelle de culture (50) comprend deux dispositifs de caractérisation (41,42), le premier dispositif de caractérisation (41) étant configuré pour mesurer les grandeurs caractéristiques des cultures amont (51) ; le deuxième dispositif de caractérisation (42) étant configuré pour mesurer les grandeurs caractéristiques des cultures aval (52).

9. Robot agricole autonome (100) selon la revendication 8, dans lequel le premier dispositif de caractérisation (41) des cultures est positionné en amont des outils de traitement (20) et le deuxième dispositif de caractérisation (42) des cultures est positionné en aval des outils de traitement (20).

10. Procédé de protection d'une parcelle de cultures (50) mis en œuvre par un robot agricole autonome (100) basé sur l'une quelconque des revendications 1 à 9, comportant les étapes de : mesure (102) des grandeurs caractéristiques des cultures amont (51) et aval (52) par le dispositif de protection (40) ; transmission (103) desdites mesures à l'unité de commande (10) ; association (104) par l'unité de commande (10) des mesures d'une même culture amont (51) et aval (52) issues du dispositif de protection (40) ; comparaison (105) par l'unité de commande (10) des mesures associées ; transmission (106) d'un ordre de protection de la parcelle de cultures (50) par l'unité de commande (10) au robot agricole autonome (100) si la comparaison dépasse un seuil prédéfini.

11. Procédé de protection d'une parcelle de cultures (50) selon la revendication 10 mis en œuvre par un robot agricole autonome basé sur la revendication 7 comportant une étape supplémentaire préliminaire (110) de relevé de la localisation des cultures (50) par le système de localisation (70), l'étape d'association des mesures (104) par l'unité de commande (10) comprenant une première association de chaque mesure de grandeurs caractéristiques d'une culture (50) issues du dispositifs de protection à un positionnement estimé par le système de localisation (70) de la culture caractérisée (50) et une deuxième association des mesures de grandeurs caractéristiques issues du dispositif de protection (40) associées à un même positionnement, lesdites mesures correspondant aux mesures des grandeurs caractéristiques d'une même culture amont (51) et aval (52).

12. Procédé de protection d'une parcelle de cultures (50) selon l'une quelconque des revendications 10 à 11, mis en œuvre par un robot agricole autonome (100) comprenant un dispositif automatique de positionnement des outils de traitement (20) dans lequel l'étape de transmission (106) d'un ordre de protection de la parcelle de cultures (50) par l'unité de commande (10) au robot agricole autonome (100) si la comparaison dépasse un seuil prédéfini comprend (109) une analyse de la comparaison et une transmission aux outils de traitement (20) d'un ordre de positionnement des outils de traitement (20).

13. Procédé de protection d'une parcelle de cultures (50) selon l'une quelconque des revendications 10 à 12, dans lequel l'étape de transmission (106) d'un ordre de protection de la parcelle de cultures (50) par l'unité de commande (10) au robot agricole autonome (100) si la comparaison dépasse un seuil prédéfini comprend (107) une transmission d'un ordre d'arrêt par l'unité de commande (10) aux moyens d'avancement (30) du robot agricole autonome (100).

14. Procédé de protection d'une parcelle de cultures (50) selon l'une quelconque des revendications 10 à 13, dans lequel l'étape de transmission (106) d'un ordre de protection de la parcelle de cultures (50) par l'unité de commande (10) au robot agricole autonome (100) si la comparaison dépasse un seuil prédéfini comprend (108) une transmission d'un ordre de protection de la parcelle de culture par l'unité de commande (10) aux outils de traitement (20) qui se mettent dans une position dite relevée, correspondant à une position dans laquelle lesdits outils de traitement (20) n'ont pas de contact avec les cultures (50).

15. Procédé de cartographie d'une parcelle de cultures mis en œuvre par un robot agricole autonome (100) basé sur la revendication 7, comportant les étapes de : mesure (1001) des grandeurs caractéristiques des cultures amont (51) par le dispositif de protection (40), transmission à l'unité de commande (10) et détection des cultures amont (51) par l'unité de commande (10) ; association (1011) par l'unité de commande (10) à chacune des cultures amont (51) détectées de leurs localisations relevées par le système de localisation (70) ; intégration (1021) de la localisation de chacune des cultures amont (50) à une première cartographie par l'unité de commande (10) ; mise en œuvre parallèlement des trois étapes suivantes : mesure (1002) des grandeurs caractéristiques des cultures aval (52) par le dispositif de protection, transmission à l'unité de commande (10) et détection des cultures aval (52) par l'unité de commande (10) ; association (1012) par l'unité de commande (10) à chacune des cultures aval (52) détectées de leurs localisations relevées par le système de localisation (70) ; intégration (1022) de la localisation de chacune des cultures aval (52) à une deuxième cartographie par l'unité de commande (10) ; pour chaque localisation de cultures amont (51) issue de la première cartographie, recherche (111) de la localisation de la culture aval (52) la plus proche issue de la deuxième cartographie et association des deux localisations par l'unité de commande (10) ; pour chaque culture amont (51) issue de la première cartographie, intégration (112) de la moyenne des deux localisations issues de la première et de la deuxième cartographie dans une troisième cartographie par l'unité de commande (10).

## Patentansprüche

1. Autonomer Landwirtschaftsroboter (100), umfassend: eine Steuereinheit (10); Verarbeitungswerkzeuge (20) zur Verarbeitung von Kulturen (50); Vorschubmittel (30), mit denen der autonome Landwirtschaftsroboter (100) in einer Vorschubrichtung (101) innerhalb einer Kulturparzelle (50) vorwärtsfahren kann; wobei der autonome Landwirtschaftsroboter **dadurch gekennzeichnet ist, dass** er eine Schutzvorrichtung (40) der Kulturparzelle (50) umfasst, wobei diese Schutzvorrichtung zu Folgendem eingerichtet ist: Messen von charakteristischen Größen vorgelagerter Kulturen (51), wobei sich diese Kulturen vor den Verarbeitungswerkzeugen (20) vor dem Durchgang der Verarbeitungswerkzeuge (20) auf den Kulturen (50) in Bezug auf die Vorschubrichtung (101) befinden; Messen von charakteristischen Größen nachgelagerter Kulturen, wobei sich diese Kulturen nach den Verarbeitungswerkzeugen (20) nach dem Durchgang der Verarbeitungswerkzeuge (20) auf den Kulturen (50) in Bezug auf die Vorschubrichtung (101) befinden; wobei die Steuereinheit (10) zu Folgendem eingerichtet ist: Empfangen von Messungen der charakteristischen Größen der vorgelagerten (51) und nachgelagerten (52) Kulturen aus der Schutzvorrichtung (40); Verarbeiten der Messungen der von der Schutzvorrichtung (40) ermittelten charakteristischen Größen der Kulturen und Durchführen eines Vergleiches der Messungen der charakteristischen Größen derselben vorgelagerten (51) und nachgelagerten (52) Kultur (50), der dem Vergleich der charakteristischen Größen der Kultur vor und nach dem Durchgang der Verarbeitungswerkzeuge (20) entspricht; Übermitteln einer Schutzanweisung für die Kulturparzelle (50) an den autonomen Landwirtschaftsroboter (100), wenn der Vergleich einen vordefinierten Schwellenwert überschreitet.

2. Autonomer Landwirtschaftsroboter (100) nach einem der vorhergehenden Ansprüche, wobei die von der Schutzvorrichtung (40) der Kulturen (50) gemessenen charakteristischen Größen ein Bild der Kultur (50) und/oder die Breite der Kultur (50) und/oder die Höhe der Kultur (50) und/oder der Winkel, den die Kultur (50) zum Boden bildet, und/oder die Position der Kultur (50) und/oder ein Abstand zwischen der Kultur (50) und einer anderen Kultur der Parzelle sind.

3. Autonomer Landwirtschaftsroboter (100) nach einem der vorhergehenden Ansprüche, wobei die Verarbeitungswerkzeuge (20) zwischen zwei Positionen, einer Arbeitsposition und einer angehobenen Position, beweglich sind, wobei die Steuereinheit (10) so eingerichtet ist, dass sie die Schutzanweisung der Kulturparzelle an die Verarbeitungswerkzeuge (20) übermittelt, die sich in der angehobenen Position positionieren.

4. Autonomer Landwirtschaftsroboter (100) nach einem der vorhergehenden Ansprüche, wobei die Steuereinheit (10) so eingerichtet ist, dass sie die Schutzanweisung der Kulturparzelle an die Vorschubmittel (30) übermittelt, um den Stillstand des autonomen Landwirtschaftsroboters (100) zu bewirken.

5. Autonomer Landwirtschaftsroboter (100) nach einem der vorhergehenden Ansprüche, wobei die Schutzvorrichtung (40) einen Bildsensor umfasst.

6. Autonomer Landwirtschaftsroboter (100) nach einem der vorhergehenden Ansprüche, umfassend ein Überstiegsgestell (60), das einen Durchgangskorridor für eine Kulturreihe (50) definiert, wobei die Schutzvorrichtung (40) bewegliche Arme umfasst, die jeweils auf beiden Seiten einer mittleren Längsebene des Durchgangskorridors angeordnet sind, und einen Sensor pro Arm, der so eingerichtet ist, dass er eine Positionsänderung des Arms misst.

7. Autonomer Landwirtschaftsroboter (100) nach einem der vorhergehenden Ansprüche, umfassend ein Ortungssystem (70), wobei die Steuereinheit (10) so eingerichtet ist, dass sie die Messungen der von der Schutzvorrichtung (40) ermittelten charakteristischen Größen der vorgelagerten (51) und nachgelagerten (52) Kulturen einer von dem Ortungssystem (70) der gekennzeichneten Kultur (50) geschätzten Position zuordnet.

8. Autonomer Landwirtschaftsroboter (100) nach einem der vorhergehenden Ansprüche, wobei die Schutzvorrichtung (40) der Kulturparzelle (50) zwei Charakterisierungsvorrichtungen (41, 42) umfasst, wobei die erste Charakterisierungsvorrichtung (41) so eingerichtet ist, dass sie die charakteristische Größen der vorgelagerten Kulturen (51) misst; wobei die zweite Charakterisierungsvorrichtung (42) so eingerichtet ist, dass sie die charakteristische Größen der nachgelagerten Kulturen (52) misst.

9. Autonomer Landwirtschaftsroboter (100) nach Anspruch 8, wobei die erste Charakterisierungsvorrichtung (41) der Kulturen vor den Verarbeitungswerkzeugen (20) positioniert ist und die zweite Charakterisierungsvorrichtung (42) der Kulturen nach den Verarbeitungswerkzeugen (20) positioniert ist.

10. Verfahren zum Schutz einer Kulturparzelle (50), die von einem autonomen Landwirtschaftsroboter (100) basierend auf einem der Ansprüche 1 bis 9 umgesetzt wird, umfassend folgende Schritte: Messung (102) der charakteristischen Größen der vorgelagerten (51) und nachgelagerten (52) Kulturen durch die Schutzvorrichtung (40); Übertragung (103) der Messungen an die Steuereinheit (10); Zuordnung (104) durch die Steuereinheit (10) der Messungen derselben vorgelagerten (51) und nachgelagerten (52) Kultur aus der Schutzvorrichtung (40); Vergleich (105) der zugehörigen Messungen durch die Steuereinheit (10); Übermittlung (106) einer Schutzanweisung für die Kulturparzelle (50) durch die Steuereinheit (10) an den autonomen Landwirtschaftsroboter (100), wenn der Vergleich einen vordefinierten Schwellenwert überschreitet.

11. Verfahren zum Schutz einer Kulturparzelle (50) nach Anspruch 10, das von einem autonomen Landwirtschaftsroboter basierend auf Anspruch 7 umgesetzt wird, das einen zusätzlichen vorläufigen Schritt (110) der Ermittlung der Kulturortung (50) durch das Ortungssystem (70) umfasst, wobei der Schritt der Zuordnung der Messungen (104) durch die Steuereinheit (10) eine erste Zuordnung jeder Messung von charakteristischen Größen einer Kultur (50) aus der Schutzvorrichtung an einer von dem Ortungssystem (70) der charakteristischen Kultur (50) geschätzten Positionierung und eine zweite Zuordnung der Messungen von charakteristischen Größen aus der Schutzvorrichtung (40), die mit derselben Positionierung verbunden sind, umfasst, wobei die Messungen den Messungen der charakteristischen Größen derselben vorgelagerten (51) und nachgelagerten Kultur (52) entsprechen.

12. Verfahren zum Schutz einer Kulturparzelle (50) nach einem der Ansprüche 10 bis 11, umgesetzt durch einen autonomen Landwirtschaftsroboter (100), umfassend eine automatische Vorrichtung zur Positionierung der Verarbeitungswerkzeuge (20), wobei der Schritt der Übermittlung (106) einer Schutzanweisung für die Kulturparzelle (50) von der Steuereinheit (10) an den autonomen Landwirtschaftsroboter (100), wenn der Vergleich einen vordefinierten Schwellenwert überschreitet, eine Analyse des Vergleichs und eine Übermittlung einer Anweisung zur Positionierung der Verarbeitungswerkzeuge (20) an die Verarbeitungswerkzeuge (20) umfasst (109).

13. Verfahren zum Schutz einer Kulturparzelle (50) nach einem der Ansprüche 10 bis 12, wobei der Schritt der Übermittlung (106) einer Schutzanweisung der Kulturparzelle (50) durch die Steuereinheit (10) an den autonomen Landwirtschaftsroboter (100), wenn der Vergleich einen vordefinierten Schwellenwert überschreitet, eine Übermittlung (107) einer Stoppanweisung von der Steuereinheit (10) an die Vorschubmittel (30) des autonomen Landwirtschaftsroboters (100) umfasst.

14. Verfahren zum Schutz einer Kulturparzelle (50) nach einem der Ansprüche 10 bis 13, wobei der Schritt der Übermittlung (106) einer Schutzanweisung für die Kulturparzelle (50) von der Steuereinheit (10) an den autonomen Landwirtschaftsroboter (100), wenn der Vergleich einen vordefinierten Schwellenwert überschreitet, eine Übermittlung (108) einer Schutzanweisung für die Kulturparzelle von der Steuereinheit (10) an die Verarbeitungswerkzeuge (20) umfasst, die sich in eine angehobene Position bewegen, entsprechend einer Position, in der die Verarbeitungswerkzeuge (20) keinen Kontakt mit den Kulturen (50) haben.

15. Verfahren zur Kartierung einer Kulturparzelle, die von einem autonomen Landwirtschaftsroboter (100) basierend auf Anspruch 7 umgesetzt wird, umfassend folgende Schritte: Messung (1001) der charakteristischen Größen der vorgelagerten Kulturen (51) durch die Schutzvorrichtung (40), Übermittlung an die Steuereinheit (10) und Erfassung der vorgelagerten Kulturen (51) durch die Steuereinheit (10); Zuordnung (1011) durch die Steuereinheit (10), zu jeder der erfassten vorgelagerten Kulturen (51), ihrer von dem Ortungssystem (70) ermittelten Ortung ; Integration (1021) der Ortung jeder der vorgelagerten Kulturen (50) zu einer ersten Kartierung durch die Steuereinheit (10); parallele Durchführung der folgenden drei Schritte: Messung (1002) der charakteristischen Größen der nachgelagerten Kulturen (52) durch die Schutzvorrichtung, Übermittlung an die Steuereinheit (10) und Erfassung der nachgelagerten Kulturen (52) durch die Steuereinheit (10); Zuordnung (1012) durch die Steuereinheit (10), zu jeder der erfassten nachgelagerten Kulturen (52), ihrer von dem Ortungssystem (70) ermittelten Ortung; Integration (1022) der Ortung jeder der nachgelagerten Kulturen (52) in eine zweite Kartierung durch die Steuereinheit (10); für jede Ortung von vorgelagerten Kulturen (51) aus der ersten Kartierung, Suche (111) der nächstgelegenen Ortung der nachgelagerten Kultur (52) aus der zweiten Kartierung und Zuordnung der beiden Ortungen durch die Steuereinheit (10); für jede vorgelagerte Kultur (51) aus der ersten Kartierung, Integration (112) des Mittelwerts der beiden Ortungen aus der ersten und der zweiten Kartierung in eine dritte Kartierung durch die Steuereinheit (10).

## Claims

1. An autonomous agricultural robot (100) comprising: a control unit (10); treatment tools (20) for treating crops (50); forward movement means (30) enabling the autonomous agricultural robot (100) to advance in a so-called advance direction (101) within a crop parcel (50); said autonomous agricultural robot being **characterised in that** it comprises a device (40) for protecting the crop parcel (50), this protective device being configured to: measure characteristic quantities of the so-called upstream crops (51), these crops being located upstream of the treatment tools (20) before passage of the treatment tools (20) over the crops (50) with respect to the advance direction (101); measure characteristic quantities of the so-called downstream crops, said crops being located downstream of the treatment tools (20) after passage of the treatment tools (20) over the crops (50) with respect to the advance direction (101); the control unit (10) being configured to: receive the measurements of the characteristic quantities of the upstream (51) and downstream (52) crops originating from the protective device (40); treat the measurements of the characteristic quantities of the crops read by the protective device (40) and performing a comparison of the measurements of the characteristic quantities of a same upstream (51) and downstream (52) crop (50), corresponding to the comparison of the characteristic quantities of said crop before and after passage of the treatment tools (20); transmit a command for protecting the crop parcel (50) to the autonomous agricultural robot (100) when the comparison exceeds a predefined threshold.

2. The autonomous agricultural robot (100) according to any one of the preceding claims, wherein the characteristic quantities measured by the device (40) for protecting the crops (50) are an image of the crop (50) and/or the width of the crop (50) and/or the height of the crop (50) and/or the angle formed by the crop (50) with the soil and/or the position of the crop (50), and/or a spacing between the crop (50) and another crop of the parcel.

3. The autonomous agricultural robot (100) according to any one of the preceding claims, wherein the treatment tools (20) are movable between two positions, a work position and a raised position, the control unit (10) being configured to transmit the crop parcel protection command to the treatment tools (20) which are positioned in the raised position.

4. The autonomous agricultural robot (100) according to any one of the preceding claims, wherein the control unit (10) is configured to transmit the crop parcel protection command to the forward movement means (30) to cause the autonomous agricultural robot (100) to stop.

5. The autonomous agricultural robot (100) according to any one of the preceding claims, wherein the protective device (40) comprises an image sensor.

6. The autonomous agricultural robot (100) according to any one of the preceding claims, comprising a straddle frame (60) defining a passage corridor for a crop row (50), wherein the protective device (40) comprises movable arms arranged respectively on either side of a longitudinal midplane of the passage corridor, and one sensor per arm configured to measure a change in the position of said arm.

7. The autonomous agricultural robot (100) according to any one of the preceding claims, comprising a location system (70), wherein the control unit (10) is configured to associate the measurements of the characteristic quantities, read by the protective device (40), of the upstream (51) and downstream (52) crops to a position, estimated by the location system (70), of the crop (50) characterised.

8. The autonomous agricultural robot (100) according to any one of the preceding claims, wherein the device (40) for protecting the crop parcel (50) comprises two characterisation devices (41, 42), the first characterisation device (41) being configured to measure the characteristic quantities of the upstream crops (51); the second characterisation device (42) being configured to measure the characteristic quantities of the downstream crops (52).

9. The autonomous agricultural robot (100) according to claim 8, wherein the first crop characterisation device (41) is positioned upstream of the treatment tools (20) and the second crop characterisation device (42) is positioned downstream of the treatment tools (20).

10. A method for protecting a crop parcel (50) implemented by an autonomous agricultural robot (100) based on any one of claims 1 to 9, including the steps of: measuring (102) the characteristic quantities of the upstream (51) and downstream (52) crops by the protective device (40); transmitting (103) said measurements to the control unit (10); associating (104), by the control unit (10), measurements of a same upstream (51) and downstream (52) culture originating from the protective device (40); comparing (105), by the control unit (10), the measurements associated; transmitting (106) a command for protecting the crop parcel (50) by the control unit (10) to the autonomous agricultural robot (100) if the comparison exceeds a predefined threshold.

11. The method for protecting a crop parcel (50) according to claim 10, implemented by an autonomous agricultural robot based on claim 7, including an additional preliminary step (110) of reading the location of the crops (50) by the location system (70), the step of associating the measurements (104) by the control unit (10) comprising a first association of each measurement of characteristic quantities of a crop (50) originating from the protective device with a positioning estimated by the location system (70) of the crop (50) characterised and a second association of the measurements of characteristic quantities originating from the protective device (40) associated with a same positioning, said measurements corresponding to the measurements of the characteristic quantities of a same upstream (51) and downstream (52) crop.

12. The method for protecting a crop parcel (50) according to any one of claims 10 to 11, implemented by an autonomous agricultural robot (100) comprising an automatic device for positioning the treatment tools (20) wherein the step of transmitting (106) a command for protecting the crop parcel (50) by the control unit (10) to the autonomous agricultural robot (100) if the comparison exceeds a predefined threshold comprises (109) analysing the comparison and transmitting to the treatment tools (20) a command for positioning the treatment tools (20).

13. The method for protecting a crop parcel (50) according to any one of claims 10 to 12, wherein the step of transmitting (106) a command for protecting the crop parcel (50) by the control unit (10) to the autonomous agricultural robot (100) if the comparison exceeds a predefined threshold comprises (107) transmitting a stop command by the control unit (10) to the forward movement means (30) of the autonomous agricultural robot (100).

14. The method for protecting a crop parcel (50) according to any one of claims 10 to 13, wherein the step of transmitting (106) a command for protecting the crop parcel (50) by the control unit (10) to the robot autonomous agricultural (100) if the comparison exceeds a predefined threshold comprises (108) transmitting a command for protecting the crop parcel by the control unit (10) to the treatment tools (20) which are placed in a so-called raised position, corresponding to a position in which said treatment tools (20) have no contact with the crops (50).

15. A method for mapping a crop parcel implemented by an autonomous agricultural robot (100) based on claim 7, including the steps of: measuring (1001) the characteristic quantities of the upstream crops (51) by the protective device (40), transmitting to the control unit (10) and detecting the upstream crops (51) by the control unit (10); associating (1011), by the control unit (10), each of the detected upstream crops (51) with their locations read by the location system (70); integrating (1021) the location of each of the upstream crops (50) with a first map by the control unit (10); implementing in parallel the following three steps: measuring (1002) the characteristic quantities of the downstream crops (52) by the protective device, transmitting to the control unit (10) and detecting the downstream crops (52) by the control unit (10); associating (1012), by the control unit (10), each of the detected downstream crops (52) with their locations read by the location system (70); integrating (1022) the location of each of the downstream crops (52) with a second map by the control unit (10); for each location of the upstream crops (51) originating from the first map, searching (111) for the location of the closest downstream crop (52) originating from the second map and associating the two locations by the control unit (10); for each upstream crop (51) derived from the first map, integrating (112) the average of the two locations originating from the first and second maps into a third map by the control unit (10).
